# EUROPEAN PATENT APPLICATION

(11) **EP 1 521 006 A1**
(43) Date of publication of application: **06.04.2005**
(21) Application number: 04255712.4
(22) Date of filing: 20.09.2004
(51) Int. Cl.: F16D 65/095, F16D 55/28

(54) **Brake caliper**

(30) Priority: 30.09.2003 GB 0322910
(71) Applicant: Meritor Heavy Vehicle Braking Systems (UK) Limited, Cwmbran, Gwent NP44 3XU (GB)
(72) Inventor: Roberts, Paul, Newport NP20 5QU (GB)
(74) Representative: Jones, John Bryn

(57) **Abstract**

A brake caliper including
an actuator (112A),
a moveable brake (122) pad including a brake pad backplate having a generally planar portion (162),
a friction material (136) secured to the brake pad backplate and being generally arcuate in shape and defining a friction material outer radius, and having a friction face (140) for engagement with a brake disc,
the brake pad defining a wear limit of the friction material at a wear limit plane being parallel to the friction face, the brake pad backplate including a first pad abutment (174) to limit rotation of the brake pad in a first direction, the first pad abutment being defined on a first lug surface (171) of a first lug (164) projecting from the generally planar portion, the first lug surface being at a radius larger than the friction material outer radius and being positioned on the friction face side of said wear limit plane,
a stationary brake pad (124),
a frame having a housing region for receiving the actuator, a reaction side portion (114) for receiving the stationary brake pad in an axially static manner, and a first bridge arm (115A) connecting the housing region to the reaction side portion the actuator being operable to move the moveable brake pad towards the stationary brake pad, in which the first pad abutment engages a first bridge abutment on the first bridge arm to limit rotation of the pad in the first direction.

## Description

The present invention relates to brake pads and to brake calipers, particularly for heavy commercial vehicles, such as lorries and trucks and trailer units for trucks and lorries.

Brake arrangements are known wherein a brake carrier is fixed to a suspension component of a vehicle and includes a slideably mounted caliper having a pair of brake pads, between which sits a brake rotor (brake disc). An actuator, generally mounted on an inboard side (also known as an actuator side) of the caliper is capable of forcing the inboard pad (also known as an actuator side pad) towards the rotor. The caliper frame is slideably mounted on pins or the like such that as the inboard pad is moved towards the disc, the reaction force causes the caliper frame to slide inboard, thereby causing an outboard portion (also known as a reaction side portion) of the frame to force the outboard pad (also known as a reaction side pad) to contact and brake the rotor in conjunction with the inboard pad. The rotor itself is axially fixed.

In order to prevent the pads from rotating with the disc during braking, pad abutments are provided. Typically these pad abutments engage corresponding carrier abutments of the carrier. Thus the frame slides relative to the carrier and the carrier is axially fixed relative to the rotor, and hence the carrier abutments are axially fixed relative to the rotor.

Typically each brake pad will have a steel brake pad backplate to which is secured friction material. Braking torque is transferred from the friction material, to the brake pad backplate, to the pad abutment and then to the carrier abutment.

It will be appreciated that as the friction material on the inboard brake pad wears, the inboard brake pad backplate advances towards the axially fixed rotor. Similarly as the friction material on the outboard brake pad wears, the outboard brake pad backplate advances towards the axially fixed rotor.

Such a design is known as a sliding caliper brake, an example of which is shown in JP7-139570.

Fixed caliper/sliding rotor brakes are also known. Here the caliper is fixed relative to a suspension component of the vehicle and provides caliper abutments against which the brake pad abutments react. The rotor is provided with splines in order for it to be able to move relative to the caliper when the brakes are applied. It will be appreciated therefore that the rotor moves relative to the caliper abutments. Such a caliper is shown in EP1074757.

As wear takes place in the frictional material of brake pads on a fixed caliper/sliding rotor brake, the movement of the brake pads and rotor is significantly different to that found when friction material of a sliding caliper brake wears. Thus, when the friction material of a reaction side pad of a fixed caliper/sliding rotor brake wears, the reaction side brake pad backplate remains stationary and hence the sliding rotor advances towards the reaction side brake pad backplate. This necessitates the actuator side brake pad also being moved towards the reaction side brake pad in order to maintain a correct running clearance between the actuator side brake pad and the rotor. Note that this movement is as the result of wear on the reaction side brake pad friction material. When the actuator side brake pad friction material wears, the actuator side brake pad backplate must advance towards the rotor, again to maintain a correct running clearance between the friction material and the rotor. By way of example, and assuming that the friction material on the actuator and reaction side brake pads wears at the same rate, for every one millimetre wear of friction material on the actuator and reaction side brake pads, the rotor must advance towards the reaction side brake pad backplate by 1 millimetre, but the actuator side brake pad backplate must advance towards the reaction side brake pad backplate by two millimetres i.e. the total wear on both brake pads. Thus, the actuator side brake pad backplate on a fixed caliper/sliding rotor brake moves twice as far as the equivalent actuator side brake pad backplate on a sliding caliper brake. This in turn means that the caliper abutments against which the actuator side brake pad abuts on a fixed caliper/sliding rotor brake must accommodate twice as much movement of the actuator side brake pad as an equivalent sliding caliper brake. This causes significant problems in the design and packaging of a suitable caliper and pad abutment for the actuator side brake pad of a fixed caliper/sliding rotor brake.

It is an object of the present invention to provide an improved fixed caliper/sliding rotor braking system.

Thus, according to the present invention there is provided a brake caliper including an actuator,
a moveable brake pad including a brake pad backplate having a generally planar portion,
a friction material secured to the brake pad backplate and being generally arcuate in shape and defining a friction material outer radius, and having a friction face for engagement with a brake disc,
the brake pad defining a wear limit of the friction material at a wear limit plane being parallel to the friction face, the brake pad backplate including a first pad abutment to limit rotation of the brake pad in a first direction, the first pad abutment being defined on a first lug surface of a first lug projecting from the generally planar portion, the first lug surface being at a radius larger than the friction material outer radius and being positioned on the friction face side of said wear limit plane,
a stationary brake pad,
a frame having a housing region for receiving the actuator, a reaction side portion for receiving the stationary brake pad in an axially static manner, and a first bridge arm connecting the housing region to the reaction side portion, the actuator being operable to move the moveable brake pad towards the stationary brake pad, in which the first pad abutment engages a first bridge abutment on the first bridge arm to limit rotation of the pad in the first direction.

The invention will now be described, by way of example only, with reference to the accompanying drawings, in which
Figure 1 is an isometric view of a known sliding caliper brake arrangement,
Figure 2 is an isometric view of certain components of figure 1,
Figures 3 and 4 are cross section views of a caliper according to the present invention including a brake pad according to the present invention,
Figure 5 is a view of a brake pad according to the present invention taking in the direction of arrow A of figure 3,
Figure 6 is an isometric view of the brake pad of figure 5,
Figure 7 is a view of the brake pad of figure 5 taken in the direction of arrow B of figure 5,
Figure 7a is a schematic view of the calipers of figure 3 taken in the direction of arrow A,
Figure 8 is an enlarged view of the brake pad and rotor of figure 7 taken in the direction of arrow C, and
Figure 9 is a part view of figure 8,
Figures 10-14 show various views of a second embodiment of a caliper according to the present invention.

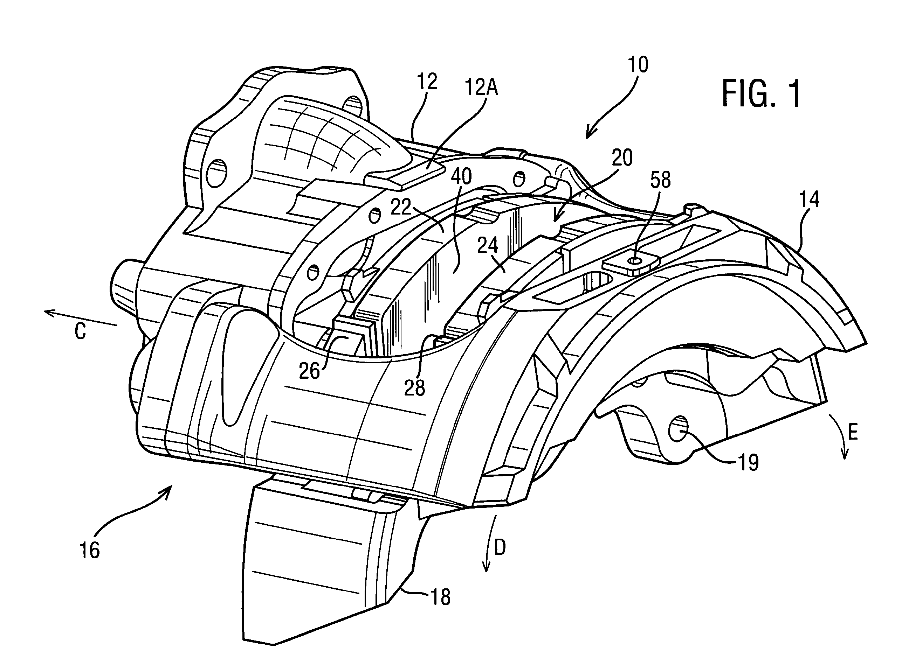

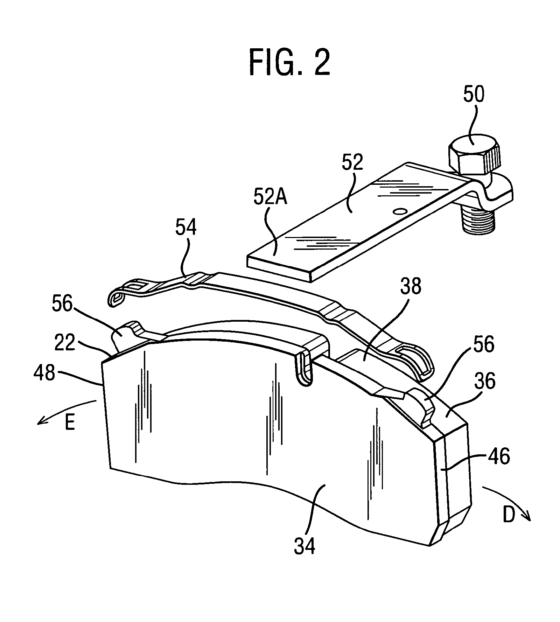

With reference to figures 1 and 2, there is shown a known sliding caliper 10, including an actuator housing 12 and a bridge arrangement 14. The actuator housing and bridge arrangement together form a frame 16. The frame 16 is slideably mounted (on pins (not shown)) relative to carrier 18. Carrier 18 is fixed via holes 19 to a suspension component of an associated vehicle. Mounted within a recess of the frame is an inner brake pad 22 and an outer brake pad 24. Outer brake pad 24 sits in a recess of the bridge arrangement. The carrier 18 has an inner carrier abutment 26 and an outer carrier abutment 28. Between the inner and outer brake pads there is an aperture 20 within which sits a brake rotor (not shown), such as a brake disc. The brake disc is axially fixed relative to the carrier 18 i.e. it cannot move axially relative to carrier 18.

An actuator (not shown) is mounted within actuator housing 12 and when operated forces inner brake pad 22 towards the rotor. Once pad 22 contacts the rotor, the reaction force causes the frame 16 to move in the direction of arrow C of figure 1 (i.e. the actuator housing moves away from the rotor), thereby drawing outer brake pad 24 into contact with the rotor. Continued operation of the actuator then causes the brake pad to squeeze the rotor, thereby applying a braking torque. The braking torque is reacted through the inner and outer carrier abutments 26 and 28. As such, no braking reaction is transmitted through the pins (mentioned above). The actuator constitutes a single actuator arrangement in as much as there is only one actuator in the brake caliper. In this case the actuator is on the inboard side of the disc. In particular there is no actuator arrangement on the outboard side of the disc.

Turning to figure 2, there is shown inner brake pad 22. Outer brake pad 24 is identical.

Inner brake pad 22 includes a generally planar backplate 34 to which friction material 36 is secured on one side. The backplate 34 is generally arcuate having circumferential ends 46 and 48.

Friction material 36 is also generally arcuate. In particular a radially outwardly facing surface 38 defines a friction material outer radius. This radius is designed to be very similar to the outer radius of the rotor, with which the brake pad is designed to be used. In this way, the full friction face 40 of the friction material can be utilised, as can the full radial extent of the friction surface of the brake rotor.

By way of example, if the brake rotor was to be rotating in the direction of arrow D (shown on figures 1 and 2) and the brakes were to be applied, then the rotor would tend to drag inner brake pad 22 in the direction of arrow D. However, such a rotation of the pad is prevented since circumferential end 46 of brake backplate 34 comes into abutment with inner carrier abutment 26.

Similarly, when the rotor is rotating in the direction of arrow E (shown on figures 1 and 2) and the brakes are applied, circumferential end 48 will come into engagement with a corresponding inner carrier abutment (not shown).

It will be appreciated that both circumferential ends 46 and 48, and hence inner carrier abutment 26 and outer carrier abutment 28 are all positioned at a radius smaller than the friction material outer radius.

It can be seen that ears 56 are positioned radially outboard of the friction material outer radius. These ears are engaged by spring 54 which in turn reacts against plate 52 to prevent the pads moving radially outwardly in use. End 52A of plate 52 sits underneath boss 12A of the actuator housing and bolt 50 engages in threaded hole 58 to secure the plate 52 onto the caliper frame 16. It will be appreciated that ears 56 play no part in preventing rotation of the brake pads when the brakes are applied.

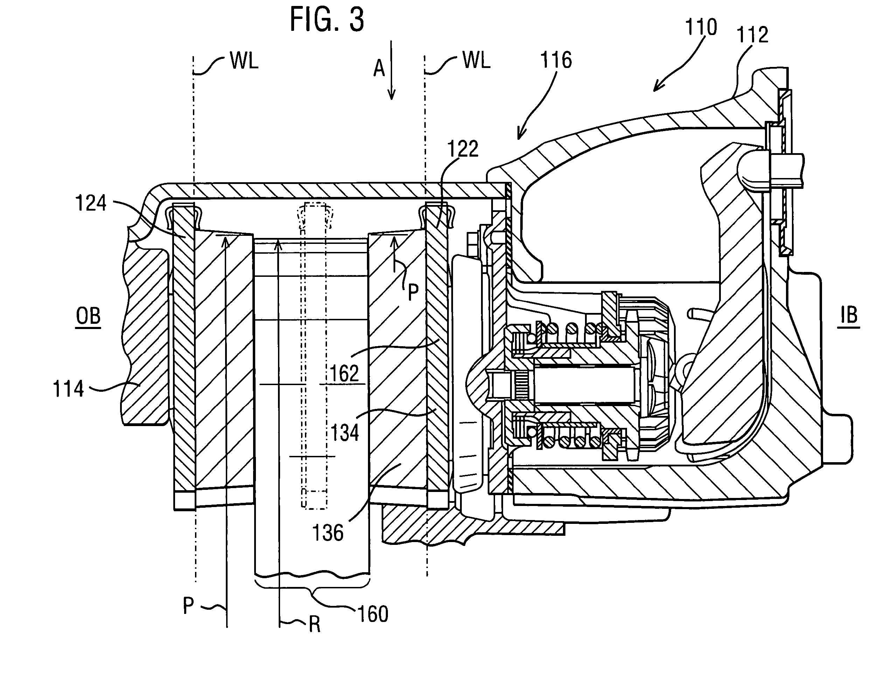

With reference to figures 3 to 9, there is shown a brake caliper according to the present invention together with a brake pad according to the present invention. Brake caliper 110 includes an actuator housing 112 positioned on an inboard side IB (also known as an actuator side) of brake disc 160, and a reaction side portion 114 positioned on an outboard side OB (also known as a reaction side) of the brake disc.

The reaction side portion 114 defines a stationary pad region 114A which receives the stationary brake pad 124 (also known as an outer brake pad). In particular, it should be noted that the stationary brake pad 124 does not move axially (when considering axis A1 of the rotor) relative to the frame 116.

Brake caliper 110 further includes a first bridge arm 115A and a second bridge arm 115B. The first and second bridge arms connect the actuator housing 112 to the reaction side portion 114. The actuator housing, first bridge arm, second bridge arm and reaction side portion together define the frame 116.

In this case the caliper is a fixed caliper and includes fixing features 190 which enable the frame 116 to be axially secured relative to a suspension component 191. Fixing features 190 might typically be lugs or bosses having a hole through which a bolt 190A can pass and thread into a threaded hole in suspension component 191. Alternatively fixing feature 190 might typically be an elongate stud having a threaded end wherein the stud passes through a clearance hole in the suspension component 191 and is then secured by a threaded nut. In this case, a rotor 160 is provided with internal splines (not shown) to allow the rotor to slide along axis A1 on a corresponding externally splined part (not shown) of the suspension component relative to the frame 116.

Actuator 112A is mounted within actuator housing 112 and defines a single actuator arrangement.

Actuation of the actuator causes the brake disk to be squeezed between the stationary (or reaction side) brake pad 124 and the moveable (or actuator side) brake pad 122.

Moveable brake pad 122 is identical to stationary brake pad 124.

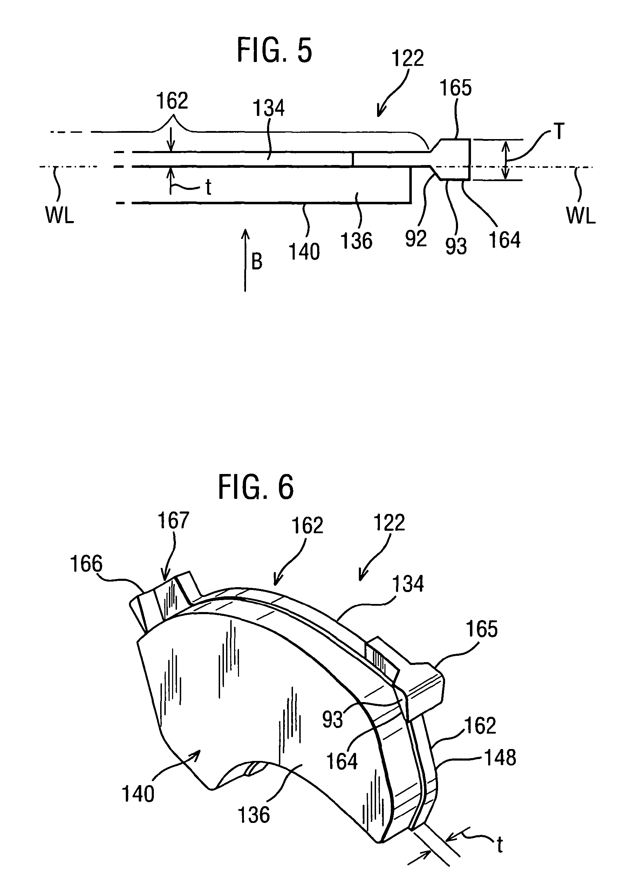

Moveable brake pad 122 (best seen in figures 5 to 7) include a brake backplate 134, to which is fixed friction material 136.

The friction material is generally arcuate and defines a friction material outer radius P which is substantially the same as to the outer radius R of the rotor 160.

The friction material has a friction face 140 which engages the rotor 160 during braking.

The backplate has a generally planar region 162.

First lug 164, further first lug 165, second lug 166 and further second lug 167 project from the generally planar region.

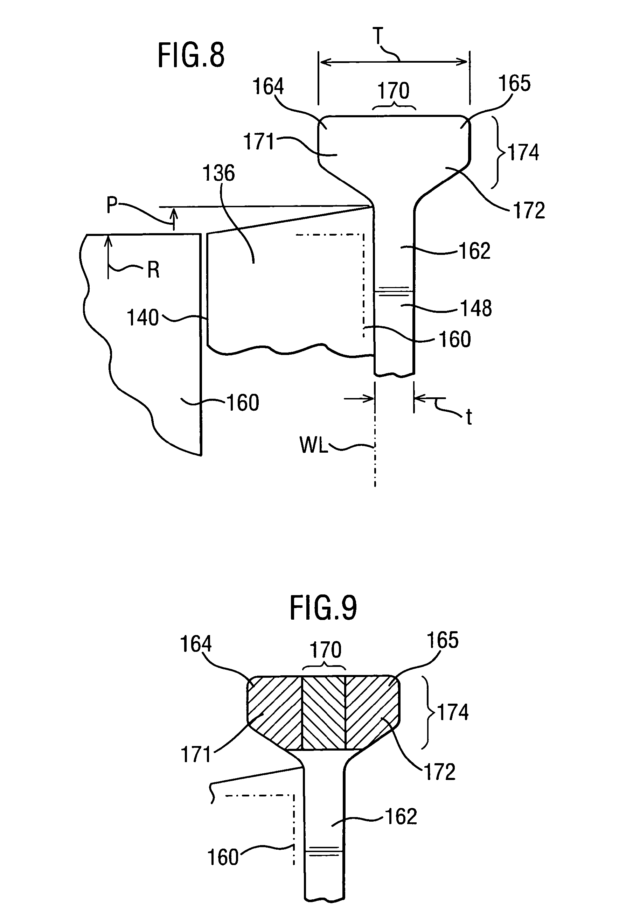

First lug 164 projects towards rotor 160 relative to planar region 162, and further first lug 165 projects away from rotor 160. The combination of an first circumferential end surface region 170, (see figure 8 and 9) first lug surface 171 of first lug 164 and further first lug surface 172 of further first lug 165 together provide a first pad abutment 174 which engages a first bridge abutment 180A of first bridge arm 115A. End surface region 170, lug surface 171 and lug surface 172 are each shown cross hatched in figure 9 for clarity. Contact between abutment 180A and pad abutment 174 prevents rotation of the pad as the brakes are applied. In particular substantially the whole of pad abutment 174 is in contact with a part of abutment 180A. As mentioned above, because caliper 110 is a fixed caliper/sliding rotor design, first bridge abutment 180A must accommodate twice as much relative movement of the actuator side pad as an equivalent abutment of a sliding caliper design, such as JP7-139570. For this reason, bridge abutment 180A is generally planar or generally flat. It does not include any localised projections (such as projections 38 and 40 of JP7-1395790) and hence is generally uniform and generally smooth.

Thus, pad abutment 174 performs the same function as circumferential end 46 of pad 34.

Consideration of figures 5 and 6 show that first lug 164 generally tapers, in as much as surface 92 tapers. End surface 93 is generally triangular and it will be appreciated that the area of end surface 93 is less than the area of a cross section of lug 164 taken at the wear limit due to the taper. Indeed any cross section area taken parallel to the wear limit plane of a part of the first lug 164 remote from the generally planar portion will be smaller than the cross section area of a part of the lug approximate the generally planar portion. Because of the bending forces across the first pad abutment, it is possible for first lug and further first lug to taper in this manner whilst still providing lugs which are strong enough to cope with the forces. The tapering allows the pad to be lighter.

The brake pad backplate can be formed in several ways e.g.:-
a) casting the backplate,
b) stamping a backplate blank and then locally deforming the blank to form the lug 164, 165, 166 and 167,
c) forging the backplate

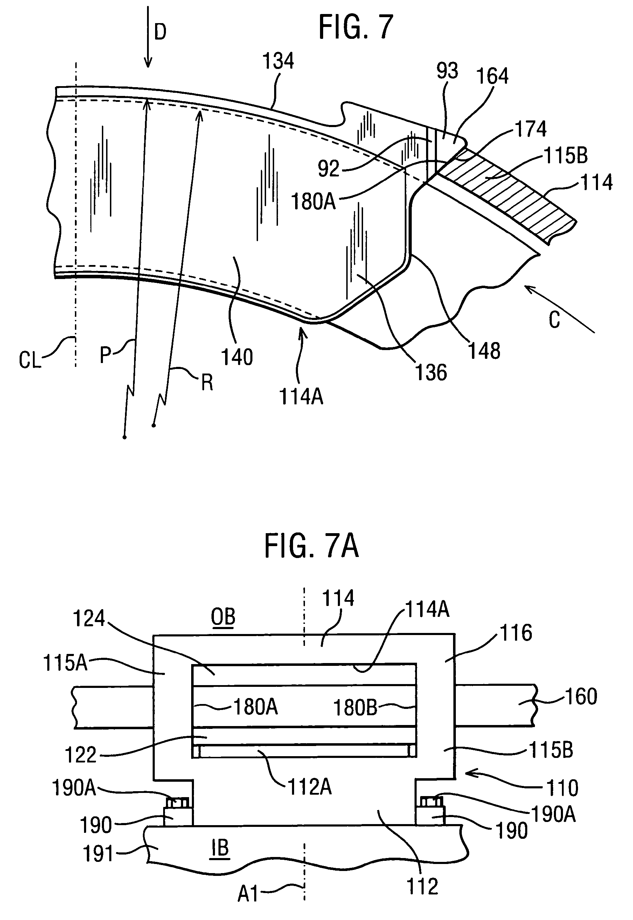

Brake pad 122 is symmetrical about centre line CL (see figure 7). Thus, a second pad abutment is defined by a combination of a second circumferential end surface region, a second lug surface of second lug 166 and a further second lug surface of further second lug 167. This second pad abutment engages a corresponding second bridge abutment 180B which is symmetrically disposed about centre line CL relative to first bridge abutment 180A.

It can be seen that pad abutment 174 is provided at a radius larger than the rotor radius R i.e. it is provided radially outboard of the rotor radius. Furthermore pad abutment 174 is provided radially outboard of the pad outer radius P.

Consideration of figure 3 shows a new rotor 160 and new brake pads 122 and 124.

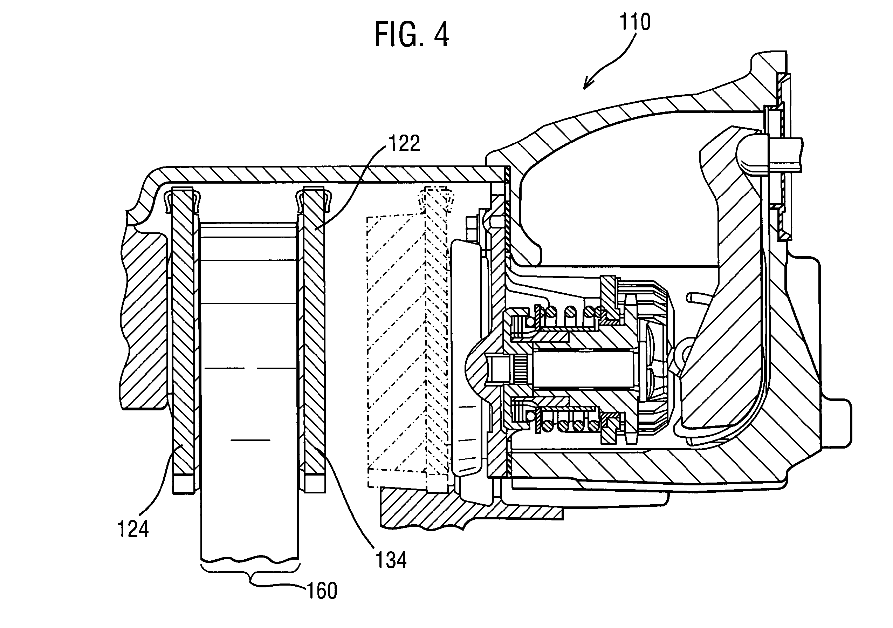

Figure 4 shows the position of the rotor 160 when the brake pads have worn and when the rotor itself has been worn. It can be seen that the left hand side of rotor 160 is very close to the backplate of brake pad 124. A comparison of the relative thickness of rotor 160 as shown in figures 3 and 4 shows that the rotor of figure 4 is drawn in a worn condition, i.e. it is thinner than the rotor 160 as shown in figure 3.

The inner brake pad 122 of figure 4 is also shown in a very worn condition, and hence it can be seen that the brake backplate 134 is very close to the right hand side of rotor 160 when viewing figure 4.

Figure 4 also shows the unworn brake pads 124 and 122 for comparative purposes. The actuator mechanism is shown in the same position in figure 3 and 4 for clarity.

It can be seen that in the worn condition (figure 4) brake pad 122 is situated in a position previously occupied by the brake rotor when the pads and rotor were in an unworn condition. In view of the fact that the pad abutment 174 is provided radially outboard of the rotor, then this pad abutment is still effective in preventing rotation of the pad when applying the brakes with worn pads and rotors.

All brake pads have a wear limit. If brake pads are continued to be used once they have reached their wear limit, then brake damage or brake failure occurs.

Considering figure 2, the brake backplate 34 is generally planar and the friction material 36 is fixed to a flat region of the backplate 34. Thus, the wear limit on brake pad 22 is the interface between the friction material and the backplate. Once all the friction material has been worn away (and it is assumed here for simplicity that the friction material wears evenly) then further use of the brake will cause metal to metal contact, i.e. the metal rotor will engage the metal backplate. The wear limit (WL) has been indicated on figures 3, 5 and 8 in respect of brake pads according to the present invention. Since the friction material 136 is again fixed to a flat region of the brake backplate 134, the wear limit is again at the interface between the friction material and the backplate.

It is clearly foolhardy to use the brake pads right down to their wear limit since metal to metal contact will almost inevitably occur, thereby causing damage and/or creating a safety hazard. For this reason, brake manufacturers and brake pad manufacturers advise changing the pads before they have been worn to their absolute limit.

Depending upon the type of brake pad, then the wear limit need not necessarily be defined by the interface between the friction material and the brake backplate. Thus, US6279222 shows a brake pad having circumferential ends which have been thickened with part of the friction material sitting within a recess between the circumferential ends. It is clear that the wear limit on this design is when the brake rotor contacts the locally thickened end.

In GB1185176 the friction material is contained within a pressed recess of a backplate. The wear limit in this design is clearly when the friction material has worn down to the level of the pressed edges of the backplate. Other brake pad designs have wear limits defined by differing features. Nevertheless, where friction material is fixed to a metal backplate, the wear limit is defined as the point at which the rotor would contact some region of the backplate, i.e. the point at which metal to metal contact occurs.

Figures 8 and 9 show (in chain dotted outline) the position of rotor 160 when the brake pad has neared its wear limit. It can be seen that lug surface 171 is positioned on the rotor side of the wear limit i.e. to the left of the wear limit when viewing the figures. As mentioned above lug surface 171 forms a part of the pad abutment 174 (the remaining part being end surface region 170 and lug surface 172). The applicant is the first to realise that for fixed caliper, sliding rotor brakes, where a moving pad (inboard pad, actuator side pad) moves into a region previously occupied by the rotor it is possible to provide at least a part of a pad abutment on the rotor side of a wear limit of the pad in order to increase the pad abutment area without increasing the overall size of the caliper. By increasing the pad abutment area in this manner, the brake pad is less likely to indent into the abutment region of the bridge arm. This is particularly applicable to heavy commercial land vehicles such as trucks, lorries and trailer units for trucks and lorries.

Furthermore, indenting of the pad into the bridge abutment is further minimised by providing a generally uniform and generally smooth bridge abutment against which the pad abutment can engage whatever the state of wear of the friction material. Thus, considering the actuator side brake pad in an unworn condition, engagement between the first pad abutment 174 and the first bridge abutment 180A define a contact area of the first pad abutment, i.e. the contact area is that part of first abutment that engages the first bridge abutment 180A. In the case of the actuator side pad 122, the contact area is the combination of first lug surface 171, end surface region 170 and further first lug surface 172. As the friction material wears, the actuator side brake pad advances towards the stationary brake pad but nevertheless substantially the whole of the contact area remains in contact with a part of the first bridge abutment, albeit a progressively different part as the friction material wears. This is not the case with JP7-1395790 in which progressively different parts of the actuator side pad abutment engage projection 38.

It will be appreciated that circumferential end 148 of brake pad 122 is of substantially constant thickness t apart from lugs 164 and 165. It will also be appreciated that circumferential end 148 is of constant thickness in an inner region, at a radius smaller than the friction material outer radius P. Circumferential end 148 only becomes thicker T at a region outboard of the friction material outer radius.

Inner brake pad 122 is identical to outer brake pad 124. This provides for manufacturing economies of scale when making brake pads. Furthermore when assembling a pair of brake pads it is irrelevant as to which side of the rotor a particular brake pad is assembled.

Because the brake pad backplate 134 is symmetrical about a centre line, when the brake pad is manufactured, it is irrelevant as to which side of the brake pad backplate the friction material is secured to. This provides for a cheaper brake pad, since the step of orientating the correct side of the brake pad backplate when applying the friction material is no longer required.

In one embodiment the first bridge abutment 180A may extend over the rotor to the reaction side portion. In this way, the first bridge abutment can additionally be utilised to react the braking torque from the reaction side brake pad. This simplifies the manufacture of the caliper since only one set of machining operations is required to create the first bridge abutment 180A which then is utilised by both pads.

In a further embodiment, abutments can be provided in the reaction side portion of the caliper at a radius smaller than the rotor radius. In this way, the brake torque can be reacted by the constant thickness inner region of circumferential end 148 for example. The applicant is the first to realise that it is possible to provide an identical pair of brake pads, which utilise different regions of their circumferential ends to react brake torque, depending upon whether the particular brake pad is fitted as the moving pad or as the stationary pad. Thus, the region of the fixed brake pad equivalent to brake pad abutment 174 of the moving brake pad is redundant for the purposes of reacting brake torque.

In a further embodiment, the brake torque applied to a stationary brake pad can be reacted by a combination of the inner and outer regions of the fixed brake pad.

As mentioned above, it will be appreciated that the outer brake pad (the stationary pad) on a fixed caliper sliding rotor brake never moves into an area previously occupied by the rotor. See for example brake pad 124 on figures 3 and 4. Thus, it is not necessary to provide the pad abutments radially outboard of the rotor radius, though in some circumstances (as mentioned above) it is nevertheless advantageous to do so.

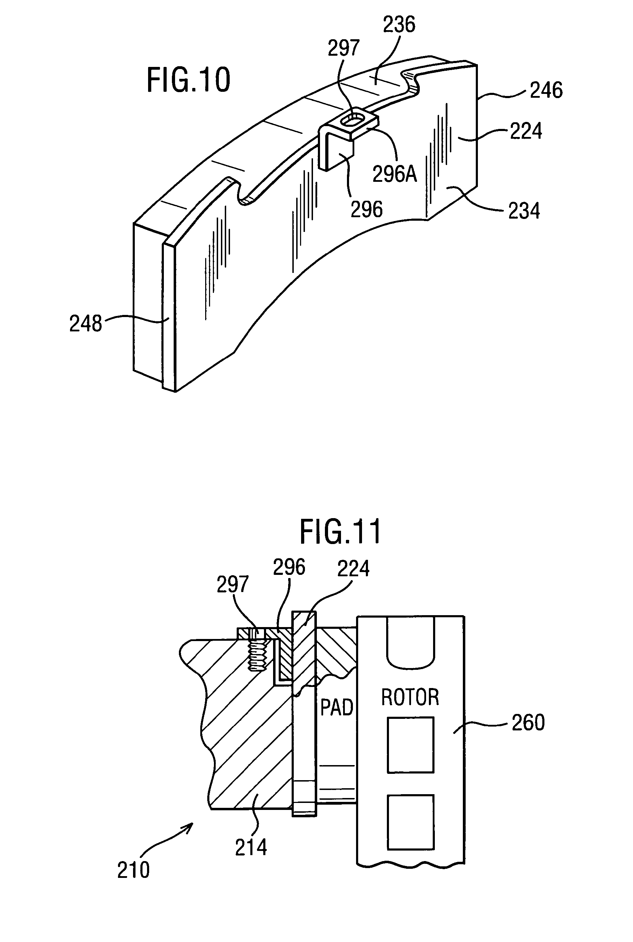

With reference to figures 10 to 14 there is shown a second embodiment of a caliper according to the present invention. Brake caliper 210 includes an actuator housing 212, a reaction side portion 214, bridge arms 215A and 215B, an inner brake pad 222 and an outer brake pad 224. Actuator housing 212 together with reaction side portion 214 and bridge arms 215A and 215B provide a frame 216.

Caliper 210 is a fixed caliper. Thus, rotor 260 is slideable on splines (not shown).

Actuator housing 212 is identical to actuator housing 112. Inner brake pad 222 is identical to inner brake pad 122. Abutment regions 280A and 280B are provided on bridge arms 215A and 215B respectively in a manner similar to the abutment regions 180A and 180B on caliper 110. Outer brake pad 224 is similar to prior art brake pad 24, and includes a backplate 234, friction material 236 and circumferential ends 246 and 248.

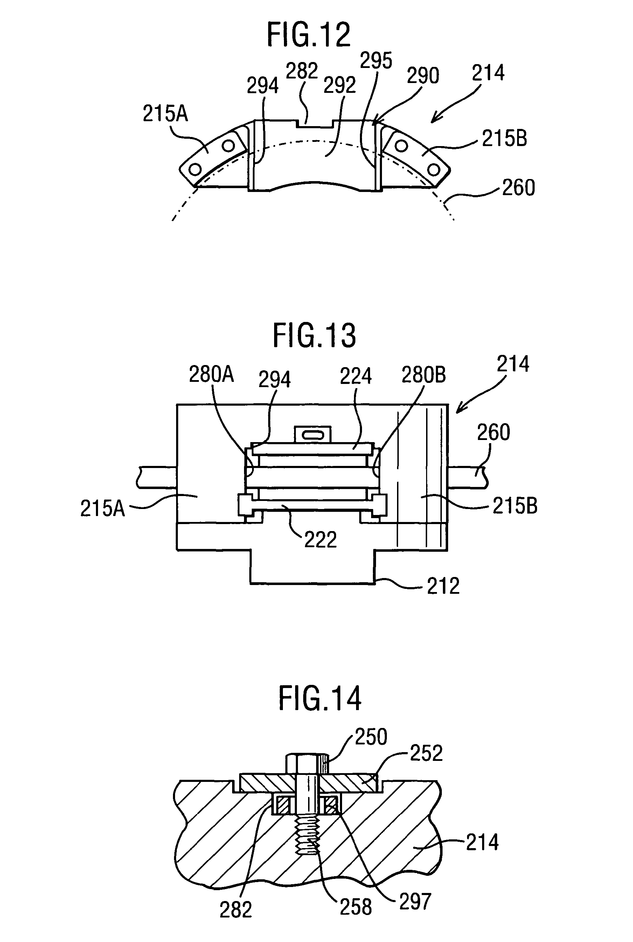

Reaction side portion 214 includes a recess 290 for receiving outer brake pad 224. Recess 290 has a flat face 292 against which backplate 234 abuts. Recess 290 includes edges 294 and 295 which act as abutment regions. In use, circumferential end 246 lies proximate edge 294 and circumferential end 248 lies proximate edge 295. Edges 294 and 295 are spaced apart slightly more than circumferential ends 246 and 248, to allow insertion and removal of the outer brake pad 224. Figure 12 shows the outer profile of rotor 260 as a dotted line. It will be appreciated that the majority of edges 294 and 295 are at a radius smaller than the radius of rotor 260. It will also be appreciated that the majority of circumferential ends 246 and 248 are at a radius smaller than the rotor radius. Thus, in use, the braking torque applied to outer brake pad 224 during braking is reacted by edge 294 or 295 (depending upon rotor rotational direction) at a radius smaller than the rotor radius.

Pad 224 includes a bracket 296 secured to backplate 234 e.g. by welding or the like. The bracket includes a hole 297 which is elongate in a circumferential direction. Tab 296A of bracket 296 fits in recess 282 of bridge 214. Bolt 250 passes through plate 252 and hole 297 to secure both the plate and the outer brake pad in position. The circumferential length of hole 297, the width of tab 296A, and the width of recess 282 are sized so that all braking torque is taken by circumferential end 246 or 248 (depending upon rotor rotational direction).

## Claims

1. A brake caliper including
an actuator,
a moveable brake pad including a brake pad backplate having a generally planar portion,
a friction material secured to the brake pad backplate and being generally arcuate in shape and defining a friction material outer radius, and having a friction face for engagement with a brake disc,
the brake pad defining a wear limit of the friction material at a wear limit plane being parallel to the friction face, the brake pad backplate including a first pad abutment to limit rotation of the brake pad in a first direction, the first pad abutment being defined on a first lug surface of a first lug projecting from the generally planar portion, the first lug surface being at a radius larger than the friction material outer radius and being positioned on the friction face side of said wear limit plane,
a stationary brake pad,
a frame having a housing region for receiving the actuator, a reaction side portion for receiving the stationary brake pad in an axially static manner, and a first bridge arm connecting the housing region to the reaction side portion, the actuator being operable to move the moveable brake pad towards the stationary brake pad, in which the first pad abutment engages a first bridge abutment on the first bridge arm to limit rotation of the pad in the first direction.

2. A brake caliper as defined in claim 1 in which the first bridge abutment is generally smooth.

3. A brake caliper as defined in claim 1 or 2 in which substantially the whole of the first pad abutment engages a portion of the first bridge abutment.

4. A brake caliper as defined in any preceding claim in which, with the moveable brake pad in an unworn condition, the engagement between the first pad abutment and the first bridge abutment defines a contact area of the first pad abutment and substantially the whole of the said contact area engages the first bridge abutment as the friction material wears.

5. A brake caliper as defined in any preceding claim in which the first lug is positioned at a first circumferential end of the generally planar portion.

6. A brake caliper as defined in claim 5 in which the first pad abutment is further defined on a first circumferential end surface region of the generally planar portion.

7. A brake caliper as defined in any preceding claim in which the first pad abutment is further defined on a further first lug surface of a further first lug projecting from the generally planar portion on a side opposite to the friction face side.

8. A brake caliper as defined in claim 7 in which the first lug surface, the further first lug surface and the first circumferential end surface region are contiguous.

9. A brake caliper as defined in any preceding claim in which the generally planar portion has a thickness (t) and the first pad abutment has a thickness (T) with the thickness of the first pad abutment being at least twice as thick as the thickness of the generally planar portion, preferably at least three times as thick.

10. A brake caliper as defined in any preceding claim in which a cross section area taken parallel to the wear limit plane of a part of the first lug remote from the generally planar portion is smaller than the cross section area of a part of the first lug proximate the generally planar portion.

11. A brake caliper as defined in claim 10 in which the first lug generally tapers from said part of the first lug remote from the generally planar portion to said part of the first lug proximate the generally planar portion.

12. A brake caliper as defined in any preceding claim in which the friction material is fixed to a substantially flat region of the brake pad backplate, said flat region defining the wear limit.

13. A brake caliper as defined in any preceding claim in which the brake pad backplate includes a second pad abutment to limit rotation of the brake pad in a second direction, the second pad abutment being defined on a second lug surface of a second lug projecting from the generally planar portion, the second lug surface being at a radius larger than the friction material outer radius and being positioned on the friction face side of said wear limit plane, the frame having a second bridge arm connecting the housing region to the stationary brake pad recess region, in which the second pad abutment engages a second bridge abutment on the second bridge arm to limit rotation of the pad in the second direction.

14. A brake caliper as defined in any preceding claim in which the moveable brake pad is identical to the stationary brake pad.

15. A brake caliper as defined in claim 14 when dependent on claim 13 in which the first pad abutment of the stationary brake pad engages the second bridge abutment on the second bridge arm to limit rotation of the fixed brake pad in the second direction.

16. A brake caliper as defined in claim 14 in which a circumferential end of the stationary brake pad abuts the frame at a radius smaller than the friction material outer radius to limit rotation of the pad in the second direction.

17. A brake caliper as defined in any one of claims 1 to 13 in which the stationary brake pad differs from the moveable brake pad and the stationary brake pad abuts the frame at a radius smaller than the friction material outer radius to limit rotation of the stationary brake pad in the second direction.

18. A brake pad including a brake pad backplate having a generally planar portion, a friction material secured to the brake pad backplate and being generally arcuate in shape and defining a friction material outer radius and having a friction face for engagement with a brake disc, the brake pad defining a wear limit of the friction material at a wear limit plane being parallel to the friction face, the brake pad backplate including a first pad abutment to limit rotation of the brake pad in a first direction, the first pad abutment being defined on a first lug surface (171) of a first lug projecting from the generally planar portion, the first lug surface being at a radius larger than the friction material outer radius and being positioned on the friction face side of said wear limit plane in which a cross section area taken parallel to the wear limit plane of a part of the first lug remote from the generally planar portion is smaller than a cross section area taken parallel to the wear limit plane of a part of the first lug proximate the generally planar portion.

19. A brake pad as defined in claim 18 in which the first lug generally tapers from a part of the first lug remote from the generally planar portion to said part of the first lug proximate the generally planar portion.
